# FASCICULE DE BREVET EUROPEEN

(11) **EP 0 252 188 B1**
(45) Date de publication et mention de la délivrance du brevet: **23.02.1994**
(21) Numéro de dépôt: 86202002.1
(22) Date de dépôt: 14.11.1986
(51) Int. Cl.: B65G 45/00

(54) **Installation de raclage d'une bande transporteuse**
Abstreifvorrichtung für Förderbänder
Conveyor belt scraping device

(30) Priorité: 09.07.1986 BE 216902
(43) Date de publication de la demande: 13.01.1988
(73) Titulaire: "Technic Gum", société anonyme, 7400 Soignies (BE)
(72) Inventeur: Davidts, Emmanuel, B-7190 Ecaussinnes (BE)
(74) Mandataire: Pieraerts, Jacques

(56) Documents cités:
- AU-B- 48 971
- AU-B- 90 976
- BE-A- 895 740
- BE-A- 900 862
- FR-A- 1 127 925
- FR-A- 2 181 385
- FR-A- 2 190 697
- GB-A- 1 069 063
- US-A- 3 656 610
- US-A- 3 999 649
- US-A- 4 533 036

## Description

Cette invention concerne une installation de raclage d'une bande transporteuse comportant un élément de support qui, en position d'utilisation, s'étend transversalement par rapport au sens longitudinal de la bande transporteuse et duquel est solidarisé un racleur comportant un élément amortisseur enfilé sur ledit élément de support et une plaque solidarisée de l'élément amortisseur sur laquelle est directement fixée une lame de raclage. Une telle installation est connue du document BE-A-895 740.

Il a déjà été proposé de monter une lame de raclage sur une matière caoutchouteuse de telle façon qu'on tend à réaliser un amortissement des vibrations provoquées par le raclage et une meilleure pression élastique de la lame de raclage sur le brin de la bande convoyeuse qu'on veut décrasser ou nettoyer.

Des tentatives de l'espèce ont déjà été décrites par le brevet américain 3,656,610 et plus particulièrement dans le brevet français 1.127.925, ainsi que plus récemment dans un brevet allemand 23 18 497.

De nombreux désavantages et imperfections caractérisent les racleurs selon les brevets français et allemand précités.

Au brevet français précité peut être reproché que l'effort de raclage n'est pas suffisant quoique le principe de l'interposition d'un élément amortisseur en caoutchouc entre un support du racleur et la laime ait constitué, à l'époque, un progrès considérable.

Quant au racleur selon le brevet allemand précité, il se caractérise par ce qu'il est convenu d'appeler le brouttement de la lame lorsque l'élément amortisseur ne travaille qu'à la compression. Lorsque dans les variantes selon ce brevet, l'élément travaille au cisaillement et à la compression, on constate que l'élément en caoutchouc se déchire prématurément, ce qui provoque évidemment un déchet considérable et inadmissible.

Dans une autre forme d'exécution différente dont s'inspirent les brevets belges 895.740 et 900.862 au nom de la demanderesse, on a constaté un effort de cisaillement qui est extrêmement défavorable et provoque un taux de déchirement que la demanderesse estime trop élevé.

Enfin le brevet US 4,533,036 décrit une installation de raclage dans laquelle des lames de raclage sont solidarisés de supports en caoutchouc enfilés sur un axe. Entre les lames et les supports de caoutchouc sont interposés des bras coudés. Dans le brevet AU 90976 sont décrites des lames de raclages fixées sur des corps élastiques, eux-mêmes serrés par des plaques de protection sur un profilé et cela à l'aide de boulons.

L'installation de raclage selon le premier brevet cité (US 4,533,036) offre le très grand inconvénient que les bras coudés sont noyés dans les supports en caoutchouc ce qui, en raison des fortes et continuelles vibrations lors du travail de raclage, provoque un déchaussement de ces tiges des supports en caoutchouc dans lesquelles elles sont noyées.

Quant au montage suggéré par le brevet AU 90976, il nécessite le serrage de nombreux boulons. Un inconvénient très important, outre la complexité des structures de serrage, doit être vu dans l'accumulation des poussières provenant du raclage ce qui, de notoriété publique, provoque un amoncellement de matériaux qui gène le travail de raclage principalement en amont de la lame de raclage, par rapport au sens de déplacement de la bande transporteuse. Ce problème de l'évacuation des poussières à déjà été exposé dans le brevet belge 895.740 au nom de la demanderesse. Le racleur selon ce brevet, quoique d'un profil analogue, présente les inconvénients cités dans le préambule.

Le but de la présente invention est donc de remédier à ces inconvénients et de réaliser une installation de raclage d'une bande transporteuse de conception nouvelle et originale ainsi que le racleur utilisé dans une telle installation.

Pour réaliser cet objectif conformément à l'invention, l'élément amortisseur est constitué d'un élément monobloc en matière élastique dans lequel un évidement est réalisé, l'élément de support comportant un profilé de section transversale correspondant à celle de l'évidement, la forme de la section transversale de l'évidement et du profilé étant telle que l'élément amortisseur peut être monté sur l'élément de support seulement par enfilage, et la forme de la section transversale de l'évidement et du profilé est telle que l'élément amortisseur est maintenu sur l'élément de support.

Dans une forme de réalisation avantageuse, la section transversale de l'évidement précité est une section en forme de T.

Dans une forme de réalisation remarquable, la section transversale de l'évidement précité est carrée.

D'autres détails et avantages de l'invention ressortiront de la description qui sera donnée ci-après d'une installation de raclage d'une bande transporteuse, selon l'invention. Cette description n'est donnée qu'à titre d'exemple et ne limite pas l'invention.

La figure 1 représente, selon une vue explosée, avec brisures partielles, l'élément de support sur lequel peut être glissé le profilé creux portant un profilé en forme de T.

La figure 2 montre un racleur selon l'état de la technique.

La figure 3 montre, en coupe, un racleur selon l'invention.

La figure 4 montre également en coupe une variante du racleur selon l'invention.

La figure 5 montre, selon une vue explosée, les organes de montage et de fixation appartenant à l'installation selon l'invention.

L'installation selon la présente demande de brevet caractérisée essentiellement par une conception nouvelle et originale du racleur proprement dit, représenté aux figures par la référence générale 1.

Le racleur proprement dit comporte un élément amortisseur 2 en une matière souple capable d'assurer , d'une part, le maintien correct de l'élément amortisseur sur un profilé et une élasticité convenable du racleur résistant essentiellement aux efforts de cisaillement, d'autre part.

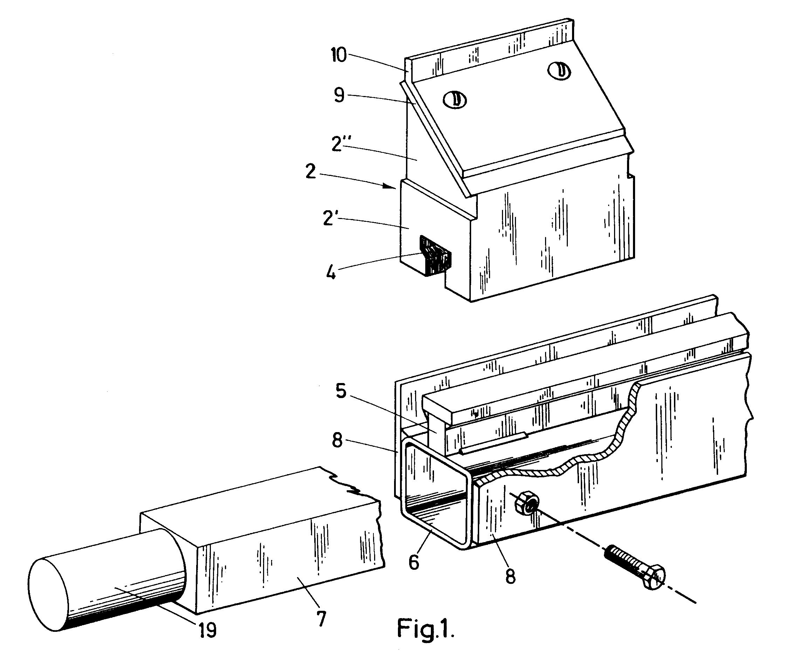

L'élément amortisseur 2 est constitué d'un élément monobloc en matière élastique dans lequel un évidement 4 est réalisé, dont la section transversale, par exemple en forme de T, s'adapte à la section transversale du profilé 5, qui est fixé sur ou fait partie d'un profilé creux 6. Selon cette même forme d'exécution, le profilé creux 6 est destiné à être glissé sur un élément de support 7 (figure 1).

De plus, deux joues de serrage 8 ont été soudées latéralement sur le profilé creux 6, ce qui permet d'obtenir par un coincement approprié un serrage adéquat de l'élément amortisseur 2 sur le profilé 5.

A sa partie supérieure, l'élément amortisseur 2 porte, solidarisée par vulcanisation, une plaque 9 sur laquelle se fixe la lame 10 du racleur.

L'élément amortisseur 2 est constitué, dans une forme de réalisation appliquée de préférence, en deux matières élastiques présentant des qualités "shore" différentes. La partie 2' de l'élément amortisseur 2 est une qualité "shore" de dureté plus élevée, tandis que la partie 2'' est d'une qualité "shore" plus souple jouant essentiellement le rôle d'amortisseur.

Grâce à cette structure, les efforts de traction et de compression mécaniques ainsi que les efforts au cisaillement, sont progressivement répartis et les forces qui en résultent sont transmises aux joues 8 qui enserrent la base de l'élément amortisseur et au profilé 5.

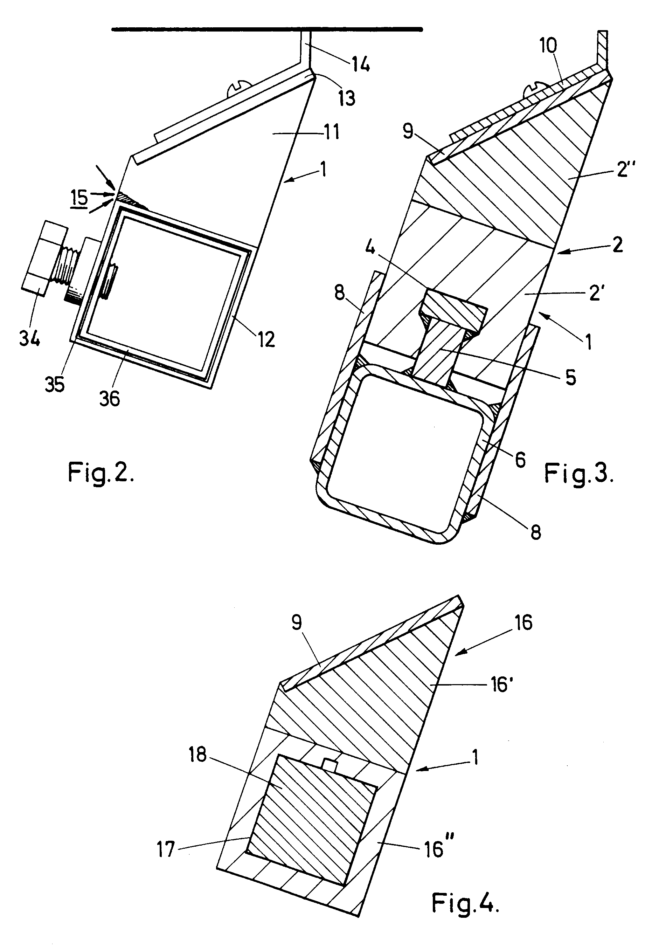

En remplaçant la combinaison métal-caoutchouc par un amortisseur monobloc en deux constituants, on évite la rupture brutale des mouvements élastiques au niveau de la solidarisation entre le caoutchouc et le métal, comme cela est représenté à la figure 2 où l'amortisseur en caoutchouc 11 est solidarisé par vulcanisation d'un part, d'un tube en acier 12 et d'une plaque de support 13 pour la lame 14. La zone indiquée par trois flèches 15 montre l'endroit où les effets du cisaillement s'observent rapidement. Cette figure montre les défauts d'un racleur selon l'état de la technique.

Il est clair également que l'élément amortisseur 2 du racleur proprement dit se monte facilement sur le profité 5 et se trouve, après un léger rabattement des joues 8 vers l'intérieur de l'ensemble, parfaitement enserré sur le support creux 6.

Tous les défauts des racleurs dans lesqueles le support amortisseur en caoutchouc est solidarisé à sa base d'un élément métallique se trouve ainsi évités.

Dans une forme de réalisation inspirée du principe, à la base de l'invention t'élément amortisseur 16 (figure 4) est constitué de deux parties 16' et 16'', présentant les mêmes caractéristiques de dureté "shore" différentes, comme exposé précédemment. La partie 16'' de l'élément amortisseur présente un évidement carré 17, de telle sorte que l'élément amortisseur 16 peut être glissé et immobilisé par sa partie 16'' sur un profilé 18 de section correspondante.

Selon cette variante, on résout les problèmes de corrosion qui sont très importants dans l'industrie chimique où tes vapeurs corrosives ou les caractéristiques des produits transportés sont nocifs pour toute ta structure métallique d'une installation de bande transporteuse.

Les deux formes de réalisation décrites ci-dessus évitent ta mise en place d'éléments mécaniques de serrage 34 (figure 2) servant à relier les éléments entre eux, afin d'éliminer te jeu 35 qui existe entre le tube 12 et le profité 36 dans lequel il est glissé. Ce montage étant à l'origine des vibrations.

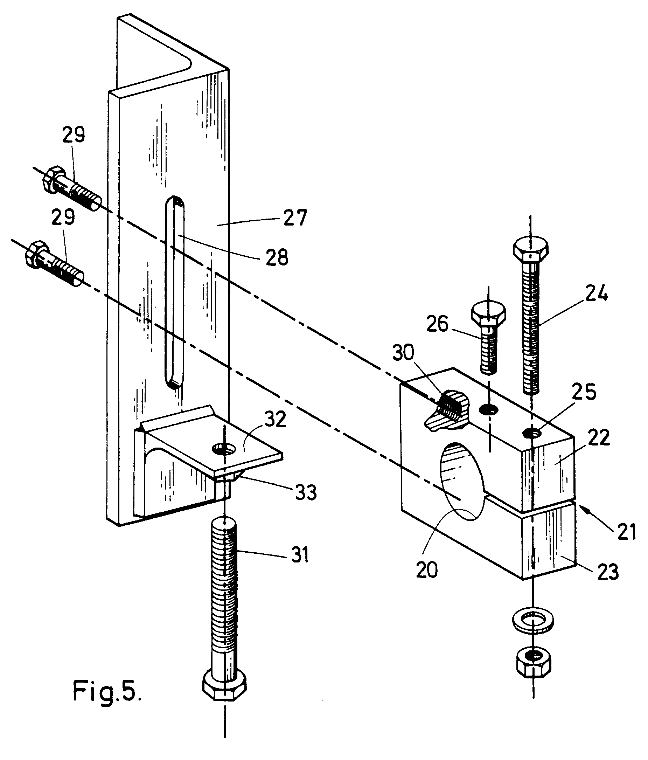

Enfin, en se référant aux figures 1 et 5, on réalisera que l'élément de support 7, de section carrée, se termine par des extrémités cylindriques 19 qui peuvent être serrées dans l'orifice 20 d'un bloc de serrage 21 comportant des mâchoires 22 et 23, qui peuvent être rapprochées l'un de t'autre par le serrage d'un boulon 24 qui traverse un orifice taraudé 25 du bloc de serrage 20. Le blocage proprement dit, dans la position angulaire désirée du support creux 7 se fait par serrage du boulon 26 qui pénètre dans un orifice taraudé qui débouche dans l'orifice 20 destiné à recevoir l'extrémité cylindrique 19.

Le bloc de serrage 21 s'adapte en hauteur sur un cornière 27 présentant une fente 28 qui peut être traversée par deux boulons de fixation 29 qui pénètrent danc les trous borgnes 30 du bloc de serrage 21.

Une fois la hauteur du bloc de serrage 21 déterminée par rapport au profité 27, le bloc de serrage 21 peut être immobilisé par vissage du boulon 31 traversant un écrou 33 fixé sur une cornière 32 elle-même soudée sur le profité 27.

## Revendications

1. Installation de raclage d'une bande transporteuse comportant un élément de support qui, en position d'utilisation, s'étend transversalement par rapport au sens longitudinal de la bande transporteuse et duquel est solidarisé un racleur (1) comportant un élément amortisseur (2, 16) enfilé sur ledit élément de support et une plaque solidarisée de l'élément amortisseur sur laquelle est directement fixée une lame de raclage, caractérisé en ce que l'élément amortisseur (2) est constitué d'un élément monobloc en matière élastique dans lequel un évidement (4, 17) est réalisé, l'élément de support comportant un profilé (5, 18) de section transversale correspondant à celle de l'évidement (4, 17), la forme de la section transversale de l'évidement (4, 17) et du profilé (5, 18) étant telle que l'élément amortisseur (2, 16) peut être monté sur l'élément de support seulement par enfilage, et la forme de la section transversale de l'évidement (4, 17) et du profilé (5, 18) est telle que l'élément amortisseur (2, 16) est maintenu sur l'élément de support.

2. Installation selon la revendication 1, caractérisée en ce que la section transversale de l'évidement précité (4) est une section en forme de T.

3. Installation selon la revendication 1, caractérisée en ce que la section transversale de l'évidement précité (17) est carrée.

4. Installation selon l'une quelconque des revendications 1 - 3, caractérisée en ce que t'élément amortisseur précité (2, 16) est constitué de deux caoutchoucs de dureté "shore" différentes la qualité "shore" de caractéristique la plus rigide se trouvant à ta base de l'élément amortisseur, c.à.d. la partie de l'élément amortisseur qui est en contact avec te profité (5, 18).

5. Installation selon la revendication 2, caractérisée en ce que, lorsque l'élément de support comporte un profilé (5) en forme de T, celui-ci est solidarisé d'un profilé creux (6) présentant deux joues de serrage (8) permettant le blocage par coincement latéral de l'élément amortisseur précité (2).

## Claims

1. An assembly for scraping a conveyor belt, comprising a support member which, in the operative position, extends transversely in relation to the longitudinal direction of the conveyor belt and to which is attached a scraper (1) comprising a damper member (2, 16) fitted on said support member and a plate which is attached to the damper member and on which a scraper blade is directly mounted, characterised in that the damper member (2) comprises a solid element of elastic material in which a recess (4, 17) is formed, the support member comprises a profiled member (5, 18) having a cross-section corresponding to that of the recess (4, 17), the shape of the cross-section of the recess (4, 17) and of the profiled member (5, 18) being such that the damper member (2, 16) can be mounted on the support member only by being fitted thereon, and the shape of the cross-section of the recess (4, 17) and of the profiled member (5, 18) is such that the damper member (2, 16) is maintained on the support member.

2. An assembly according to claim 1, characterised in that the cross-section of said recess (4) is a T-shaped section.

3. An assembly according to claim 1, characterised in that the cross-section of said recess (17) is square.

4. An assembly according to any one of claims 1 to 3, characterised in that said damper member (2, 16) is composed of two rubbers of different "shore" hardness, the "shore" property of a more rigid nature being situated at the base of the damper member, i.e. the part of the damper member which is in contact with the profiled member (5, 18).

5. An assembly according to claim 2, characterized in that, when the support member comprises a T-shaped profiled member (5), the latter is attached to a hollow profiled member (6) having two clamping flanges (8) enabling said damper member (2) to be locked by lateral wedging.

## Patentansprüche

1. Anlage zum Abschaben eines Transportbandes, mit einem Tragelement, das sich in der Benutzungsstellung relativ zur Längsrichtung des Transportbandes in Querrichtung erstreckt, und an dem ein Schaber (1) befestigt ist, der ein auf das Tragelement aufgeschobenes Dämpfungselement (2, 16) und eine mit dem Dämpfungselement fest verbundene Platte umfaßt, auf der direkt ein Schabemesser befestigt ist,
dadurch **gekennzeichnet,** daß das Dämpfungselement (2) aus einem einstückigen Element aus elastischem Material besteht, in welchem eine Aussparung (4, 17) eingearbeitet ist, wobei das Tragelement ein Profil (5, 18) mit einem Querschnitt aufweist, der demjenigen der Aussparung (4, 17) entspricht, wobei die Form des Querschnittes der Aussparung (4, 17) und des Profils (5, 18) so beschaffen ist, daß das Dämpfungselement (2, 16) auf dem Tragelement nur durch Aufschieben montiert werden kann, und daß die Form des Querschnittes der Ausnehmung (4, 17) und des Profils (5, 18) so beschaffen ist, daß das Dämpfungselement (2, 16) auf dem Tragelement gehalten wird.

2. Anlage nach Anspruch 1,
dadurch **gekennzeichnet,** daß der Querschnitt der genannten Ausnehmung (4) einen T-förmigen Querschnitt besitzt.

3. Anlage nach Anspruch 1,
dadurch **gekennzeichnet,** daß der Querschnitt der genannten Ausnehmung (17) quadratisch ist.

4. Anlage nach einem beliebigen Anspruch 1 bis 3,
dadurch **gekennzeichnet,** daß das genannte Dämpfungselement (2, 16) aus zwei Kautschukelementen unterschiedlicher "Shore"-Härte besteht, wobei sich die "Shore"-Qualität der größten Steifigkeit am Fuße des Dämpfungselementes, das heißt, des Abschnittes des Dämpfungselementes befindet, das mit dem Profil (15, 18) in Berührung steht.

5. Anlage nach Anspruch 2,
dadurch **gekennzeichnet,** daß wenn das Tragelement ein T-förmiges Profil (15) aufweist, dieses fest mit einem hohlen Profil (6) verbunden ist, das zwei Spannbacken (8) aufweist, die das Blockieren des genannten Dämpfungselementes (2) durch seitliches Einklemmen ermöglichen.
